**Europäisches Patentamt**

**European Patent Office**

**Office européen des brevets**

(19)

(11) Veröffentlichungsnummer : **0 434 944 B1**

(12)

# EUROPÄISCHE PATENTSCHRIFT

(45) Veröffentlichungstag der Patentschrift :
**12.05.93 Patentblatt 93/19**

(51) Int. Cl.$^5$ : **C10C 3/14**

(21) Anmeldenummer : **90121450.2**

(22) Anmeldetag : **09.11.90**

(54) **Bitumengranulat und Verfahren zu seiner Herstellung.**

(30) Priorität : **21.12.89 DE 3942215**

(43) Veröffentlichungstag der Anmeldung :
**03.07.91 Patentblatt 91/27**

(45) Bekanntmachung des Hinweises auf die
Patenterteilung :
**12.05.93 Patentblatt 93/19**

(84) Benannte Vertragsstaaten :
**AT BE CH DE ES FR GB IT LI NL SE**

(56) Entgegenhaltungen :
**BE-A- 526 282**
**CH-A- 378 216**
**DE-A- 2 438 330**

(73) Patentinhaber : **Degussa Aktiengesellschaft**
**Weissfrauenstrasse 9**
**W-6000 Frankfurt am Main 1 (DE)**

(72) Erfinder : **Müller, Karl-Hans, Dr.**
**Robert Koch-Strasse 17**
**W-6457 Bruchköbel (DE)**
Erfinder : **Barthel, Walter**
**Gartenstrasse 7**
**W-6456 Langenselbold (DE)**

## Beschreibung

Die Erfindung betrifft ein Bitumengranulat sowie das Verfahren zu seiner Herstellung.

Bitumen ist ein Erdölprodukt, das durch Raffination des Erdöles gewonnen wird. Als hochmolekulares Gemisch von Kohlenwasserstoffen ist Bitumen eine dunkelfarbige, springharte bis zähflüssige, klebrige Masse mit wasserabstoßenden Eigenschaften (vgl. DIN 55 946).

Aufgrund des thermoplastischen Verhaltens ist Bitumen bei hoher Temperatur gut zu verarbeiten.

Für die meisten Anwendungen, z. B. zur Aufbereitung von Asphaltmischgut für den Straßenbau oder bituminösen Dachbahnen muß das Bitumen heißflüssig von der Raffinerie angeliefert und in isolierten Lagertanks bereitgehalten werden.

Es ist bekannt, ein pulverförmiges Bitumenkonzentrat mit einem Gehalt an synthetischer Kieselsäure von 10 bis 80 Gew.-% herzustellen, indem man das flüssige Bitumen auf Kieselsäure aufsprüht (DE-A- 29 33 339). Dabei wird die Kieseläure vollständig von Bitumen umgeben.

Das bekannte Bitumenkonzentrat hat den Nachteil, daß es während des Lagerns aufgrund des statischen Drucks zusammenklebt und dabei die Rieselfähigkeit verliert. Es besteht somit die Aufgabe, ein Bitumengranulat herzustellen, das über einen längeren Zeitraum lagerfähig ist und dabei seine Rieselfähigkeit nicht verliert.

Gegenstand der Erfindung ist ein rieselfähiges Bitumengranulat, welches dadurch gekennzeichnet ist, daß es als Umpuderungs- und Trenmittel eine Fällungskieselsäure in einer Menge von 0,5 bis 15 Gew.-%, vorzugsweise 6,1 bis 15 Gew.-% enthält.

In einer bevorzugten Ausführungsform der Erfindung kann der Gehalt an Fällungskieselsäure 1,8 bis 12, insbesonders 10 Gew.-% betragen.

Die Schüttdichte des erfindungsgemäßen Bitumgranulates kann 400 bis 800 g / l betragen (gemessen nach DIN 53 912).

Die Teilchengröße des erfindungsgemäßen Bitumengranulates kann 500 bis 700 µm betragen.

Als Bitumen können alle bekannten Bitumensorten eingesetzt werden. Besonders geeignet sind Bitumensorten, die bei Raumtemperatur fest sind.

Kaum geeignet sind weichere Straßenbitumensorten, wie z. B. B 200.

Die Fällungskieselsäuren können unvermahlen oder vermahlen bzw. sprühgetrocknet oder sprühgetrocknet und vermahlen eingesetzt werden.

Die mittlere Teichlengrösse der Agglomerate (Sekundärteilchengrösse) kann 4 bis 100 µm, vorzugsweise 6 bis 10 µm (Coulter Counter) betragen.

Tabelle 1

| | | FK 320 DS | Durosil | Sipernat 22 | Sipernat 22 S | Sipernat 22 LS |
|---|---|---|---|---|---|---|
| Oberfläche nach BET 1) | $m^2/g$ | 170 | 60 | 190 | 190 | 190 |
| Mittlere Größe der Primärteilchen | nm | 18 | 40 | 18 | 18 | 4,5 |
| Stampfdichte 2) | g/l | 80 | 210 | 270 | 120 | 80 |
| ph-Wert 3) | | 6,3 | 9 | 6,3 | 6,3 | 6,3 |
| Siebrückstand 4) nach Mocker 45 μm | % | 0,01 | 0,3 | 0,5 | 0,1 | 0,1 |
| Trocknungsverlust 5) (2h bei 105°C) | % | 6 | 6 | 6 | 6 | 6 |
| Glühverlust 5) 6) (2h bei 1000°C) | % | 5 | 6 | 5 | 5 | 5 |
| $SiO_2$ 7) | % | 98 | 98 | 98 | 98 | 98 |
| $Na_2O$ 7) | % | 1 | 1 | 1 | 1 | 1 |
| $Fe_2O_3$ 7) | % | 0,03 | 0,03 | 0,03 | 0,03 | 0,03 |
| $SO_3$ 7) | % | 0,8 | 0,8 | 0,8 | 0,8 | 0,8 |

1) nach DIN 66 131
2) nach DIN 53 194 (nicht gesiebt), ISO 787/XI oder JIS K 5101/18
3) nach DIN 53 200 (in 5 %iger wäßriger Dispersion), ISO 787/IX, ASTM D 1208 oder JIS K 5101/24
4) nach DIN 53 580, ISO 787/XVII oder JIS K 5101/20
5) nach DIN 55 921, ASTM D 1208 oder JIS K 5101/23
6) bezogen auf die 2 Stunden bei 105 °C getrocknete Substanz
7) bezogen auf die 2 Stunden bei 1000 °C geglühte Substanz

EP 0 434 944 B1

Extrusil

| | | | |
|---|---|---|---|
| Oberfläche nach BET 1) | | $m^2/g$ | 35 |
| Mittlere Größe der Primärteilchen | | nm | 25 9) |
| Stampfdichte | 2) | g/l | 300 |
| ph-Wert | 3) | | 10 |
| Siebrückstand 4) nach Mocker, 45 μm | | % | 0,2 |
| Trocknungsverlust 5) (2 h, 105 °C) | | % | 6 |
| Glühverlust 5) 6) (2 h, 1000 °C) | | % | 7 |
| $SiO_2$ | 7) | % | 91 |
| $Al_2O_3$ | 7) | % | 0,2 |
| CaO | 7) | % | 6 |
| $Na_2$ | 7) | % | 2 |
| $Fe_2O_3$ | 7) | % | 0,03 |
| $SO_3$ | 7) | % | – |
| $Cl^-$ | 7) | % | 0,8 |

1) nach DIN 66 131
2) nach DIN 53 194 (nicht gesiebt), ISO 787/XI oder JIS K 5101/18
3) nach DIN 53 200 (in 5 %iger wäßriger Dispersion), ISO 787/IX, ASTM D 1208 oder JIS K 5101/24
4) nach DIN 53 580, ISO 787/XVII oder JIS K 5101/20
5) nach DIN 55 921, ASTM D 1208 oder JIS K 5101/23
6) bezogen auf die 2 Stunden bei 105 °C getrocknete Substanz
7) bezogen auf die 2 Stunden bei 1000 °C geglühte Substanz

8) nicht reproduzierbar zu messen
9) Die Größe der Primärteilchen ist bei Silikaten wegen starker Verwachsungen nicht genau zu bestimmen
10) Gesamtglühverlust, 1 h 800 °C
11) bezogen auf die 1 h bei 800 °C geglühte Substanz

Die Bestimmung der physikalisch-chemischen Kenndaten erfolgt nach den folgenden Methoden:
pH-Wert (nach DIN 53 200)

Der pH-Wert wird elektrometrisch mit einer Glaselektrode und einem pH-Meter ermittelt. Der pH-Wert von Kieselsäuren liegt im allgemeinen im neutralen, der von Silikaten im schwach alkalischen Bereich.

Siebrückstand (nach DIN 53 580)

Eine Kennzahl für die Feinteiligkeit ist der Siebrückstand. Zur Erfassung der in kleinsten Mengen in Fällungskieselsäuren und Silikaten vorkommenden nicht oder schwerdispergierbarer Anteile, wird der Siebrückstand nach Mocker bestimmt. Bei diesem Verfahren wird eine Kieselsäuresuspension mit 4 bar Wasserdruck durch das Sieb gespült. Das Sieb wird anschließend getrocknet und der Siebrückstand ausgewogen. Zur Anwendung kommen 45 Micrometer-Siebe, die 325 mesh (nach ASTM) entsprechen.

Oberfläche nach BET (DIN 66 131)

Die Oberfläche von Kieselsäuren und Silikaten wird nach der BET-Methode in $m^2/g$ gemessen. Das Verfahren beruht auf der Adsorption von gasförmigem Stickstoff bei der Temperatur des flüssigen Stickstoffs. Die Areameter-Methode nach Haul und Dümbgen kann vorteilhaft angewandt werden. Eine Eichung ist erforderlich. Es wird sowohl die "innere" als auch die "äußere" Oberfläche erfaßt.

Mittlere Größe der Primärteilchen

Die mittlere Größe der Primärteilchen läßt sich über elektronenmikroskopische Aufnahmen bestimmen. Hierzu weiden die Durchmesser von ca. 3.000 - 5.000 Teilchen bestimmt, deren arithmetisches Mittel errechnet wird. Die einzelnen Primärteilchen liegen im allgemeinen nicht isoliert vor, sondern sind zu Aggregaten und Agglomeraten vereinigt. Die "Agglomerat"-Teilchengröße von Fällungskieselsäuren und Silikaten hängt vom Vermahlungsprozeß ab.

Stampfdichte (nach DIN 53 194)

Es handelt sich um eine Maßangabe für das Gewicht des pulverförmigen Produktes. Ca. 200 ml Kieselsäure werden in dem Meßzylinder des Stampfvolumeters 1.250 mal gestampft. Aus der Einwaage und dem Volumen wird die Stampfdichte berechnet und in g/l angegeben.

Trocknungsverlust (nach DIN 55 921)

Die Fällungsprodukte enthalten einen kleinen Anteil physikalisch gebundenen Wassers. Nach 2 Stunden Trocknung im Trockenschrank bei 105 °C ist die Hauptmenge des physikalisch gebundenen Wassers entfernt.

Glühverlust (nach DIN 55 921)

Nach 2 Stunden Glühzeit bei 1000 °C ist auch das chemisch in Form von Silanolgruppen gebundene Wasser entfernt. Der Glühverlust wird an der 2 h bei 105 °C getrockneten Substanz bestimmt.

Die Fällungskieseläure FK 320 DS ist eine Fällungskieseläure, die nach der Drehrohrtröcknung dampfstrahlvermahlen wurde.

Die Fällungskieselsäure Durosil ist eine unvermahlene drehrohrgetrocknete Fällungskieselsäure.

Die Fällungskieselsäure Sipernat 22 ist eine sprühgetrocknete Fällungskieselsäure.

Die Fällungskieselsäure Sipernat 22 S ist eine sprühgetrocknete und vermahlene Fällungskieselsäure.

Die Fällungskieselsäure Sipernat 22 LS ist eine sprühgetrocknete und luftstrahlvermahlene Fällungskieselsäure.

Die Fällungskieselsäure Extrusil ist eine Fällungskieselsäure mit einem geringen Anteil an Calciumsilikat.

Ein weiterer Gegenstand der Erfindung ist das Verfahren zur Herstellung des erfindungsgemäßen Bitumengranulates, welches dadurch gekennzeichnet ist, daß man in einem bekannten Sprühmischer heißes, flüssiges Bitumen verdüst und gleichzeitig über den Kaltlusftstrom die Fällungskieselsäure in den Sprühmischer einträgt.

Bei dem erfindungsgemäßen Verfahren erkalten die flüssigen Bitumentröpfchen in dem Kaltluftstrom. Während dieses Schrittes werden die Bitumentröpfchen von der als Umpuderungs- und Trennmittel wirkenden Fällungskieselsäure umhüllt und dadurch vor Verbackung und Verklebung an den Grenzflächen bewahrt.

Das Bitumen ist in kaltem Zustande fest. Es muß vor der Zugabe in den Sprühischei aufgeschmolzen werden.

Besonders wirtschaftlich ist die Verarbeitung von flüssigem und heißem Bitumen aus direktem Raffineriebezug bzw. die Stationierung des Sprühmischers in der Raffinerie.

Bei dem erfindungsgemäßen Verfahren können bevorzugt die folgenden Parameter eingehalten werden:

| Bitumentemperatur | > 180 °C |
|---|---|
| Kühllufttemperatur | < 10 °C |
| Viskosität des Bitumens beim Versprühen: | < 70 cp. |

Das derart hergestellte, erfindungsgemäße Bitumengranulat kann mit weiterem Umpuderungs- und Trennmittel vermischt werden.

Das erfindungsgemäße Bitumengranulat behält die typenspezifischen Eigenschaften des eingesetzten Bitumens und wirkt nach dem Aufschmelzen als Bindemittel.

Für verschiedene Anwendungen können die Anteile an Umpuderungs- und Trennmittel als Zuschlagstoffe dienen.

Das erfindungsgemäße Bitumengranulat weist die folgenden Vorteile auf:

Die Herstellung kann in der Raffinerie erfolgen. Im Zuge der Verlagerung der Mineralölaufbereitungsstätten aus den Industrie- bzw. Verbraucherländern in die Länder der Erdölgewinnung können Probleme entstehen, den "Destillationssumpf" Bitumen als zähflüssige elastovisköse Masse zu transportieren.

Ein Ausgießen in Blöcke erfordert einen Aufschmelzprozeß an der Stätte der Verarbeitung vor der Dosierung.

Der Vertrieb eines pulverförmigen Stoffes ist weniger aufwendig zu handhaben. Für kleine bis mittlere Abnahmemengen bietet sich die Verpackung in umweltfreundliche Papiersäcke an. Darüber hinaus sind Großgebinde und Silos möglich.

Im Regelfalle läßt sich kaltes Schüttgut einfacher dosieren als heißflüssige Massen.

Für die Straßenasphaltaufbereitung bietet sich eine Vereinfachung der Mischanlagen an, sowohl für die Bitumenbevorratung als auch für die Mischtechnologie.

Die Herstellung und Verarbeitung von bituminösen Dachbaustoffen wird erleichtert.

Die Produktion von Bautenschutzprodukten (z. B. bituminöse Lacke und Anstrichstoffe) auf Lösungsmittel bzw. Emulsionsbasis wird erleichtert.

Das erfindungsgemäße Bitumengranulat ist ein kalt ausbringbares, pulverförmiges Bindemittel, das durch Erwärmen vor Ort (z. B. Aufschmelzen) vewendbar wird. Damit können Reparaturen an der Baustelle, auf Straßen, Brücken, Dächern etc. ausgeführt werden.

Es ermöglicht die vereinfachte Herstellung spezieller Baustoffe (z. B. Isolierplatten) durch Verwendung des granulatförmigen Bitumens bei heißem Verpressen.

Beispiel

Bitumengranulat wird durch ein Sprühgranulationsverfahren hergestellt. Die Anlage besteht aus dem Sprühgranulator der Firma Luco-Sprühmisch-Technik GmbH, einer Schmelzstation und einem Mischer. In dem Schmelzbehälter wird eine handelsübliche, kalte Bitumensorte aufgeschmolzen. Das flüssige Bitumen wird anschließend im Sprühgranulator verdüst. Dabei findet im Sprühturm die Granulierung statt. Als Umpuderungs- und Trennmittel wird eine Kieselsäure Sipernat 22 S verwendet. Das abgekühlte Bitumengranulat wid in einem Mischer nachbehandelt.

Die Schmelzstation besteht aus einem Behälter, der durch Heizbänder erwärmt wird. Eine andere Art von Heizung, z. B. mit Doppelwand und Thermoöl, ist durchaus denkbar.

Die Temperatur im Behälter wird mittels eines Thermostates geregelt. Mit der derzeitigen Ausrüstung der Anlage kann eine Temperatur von ungefähr 250 °C erreicht werden. Für bestimmte schwerschmelzbare Bitumensorten ist ein höherer Temperaturbereich nötig. (300 - 350 °C).

Aus dem Behälter wird mit einer Pumpe gefördert. Auf der Druckseite der Pumpe ist ein Pulsationdämpfer zum Ausgleich der durch die Kolbenpumpe erzeugten Pulsationen installiert. Der Pulsationsdämpfer ist ein Rohr, das auf der Druckseite der Pumpe montiert wird. Dieses Rohr ist an der Oberseite durch einen Flansch verschlossen. Auf diesem Flansch ist ein Manometer angebracht. Während des Betriebszustandes pumpt die Pumpe erst das Bitumen in den Pulsationsdämpfer, wodurch ein Luftpolster entsteht. Dieses Luftpolster kompensiert in weitem Maße die von der Pumpe erzeugte Pulsation und ermöglicht bei dem Verdüsen des Bitumens einen fast konstanten Sprühkegel.

Alle Leitungen ab Behälter sind bis 250 °C begleitbeheizt. Die Leitungsführung aus dem Behälter geht entweder zum Sprühgranulator oder zurück zum Behälter.

Das Bitumen gelangt mit einer Temperatur von ungefähr 200 °C (die exakte Temperatur ist eine Funktion der Bitumensorte) in den Sprühgranulator der Firma Luco. Das Gerät kombiniert 2 Verfahren, die Wirbelbett- und die Zerstäubungstechnik. Im Oberteil des Turms wird das Bitumen verdüst. Gleichzeitig wird im Sprühturm das Trennmittel Kieselsäure Sipernat 22 S zugegeben.

Die sich abkühlenden Bitumenteilchen umhüllen sich mit dem Trennmittel Kieselsäure Sipernat 22 S, das ein Zusammenkleben des Bitumens verhindert. Das teilweise noch warme Bitumengranulat fällt im Turm weiter nach unten und erreicht dann das Wirbelbett, welches zur weiteren Abkühlung des Bitumengranulates dient. Erst wenn das Bitumen auch seine innere Wärme abgegeben hat, verläßt es den Sprühgranulator. Das Bitumen kann dann abgesackt werden oder wird - wenn erforderlich - einer Nachbehandlung unterworfen.

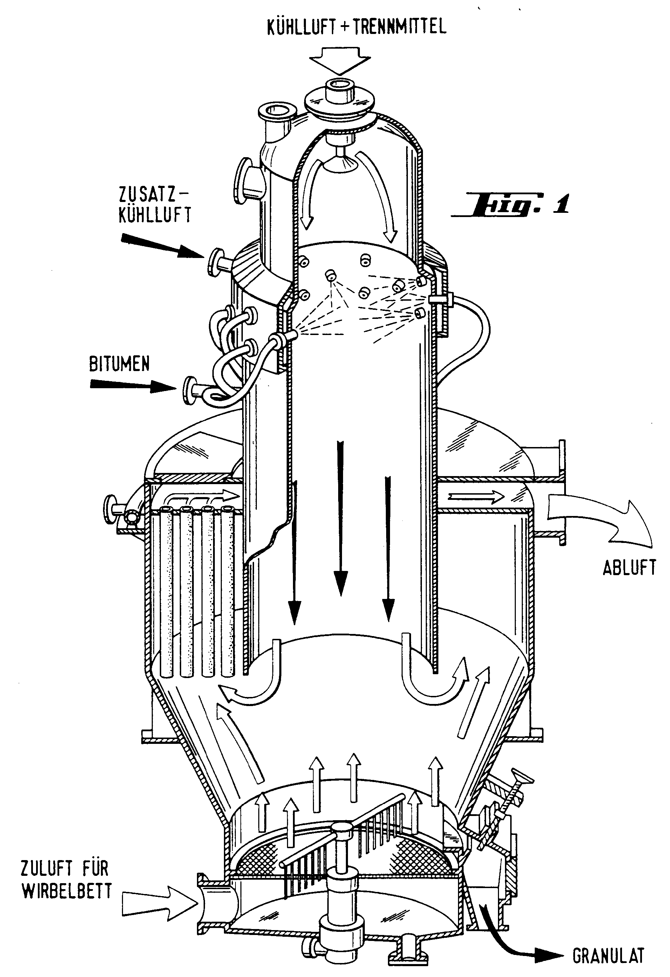

Figur 1 zeigt den Sprühgranulator. Oberhalb des rechteckigen Wirbelbettes steht der Sprühmischbehälter. Dieser Behälter hat eine Höhe von 3 Meter und einen Druchmesser von 2 Metern. Die Höhe des Sprühturmes wird durch die zur Abkühlung des Granulates benötigte Fallstrecke bestimmt.

Der Durchmesser des Behälters soll wenigstens 1 Meter größer sein als der größte Durchmesser des Sprühkegels. Dies soll vermeiden, daß das Versprühte gegen die Wand verdüst wird. Der Sprühkegeldurchmesser ist ein Erfahrungswert, der durch Vorversuche bestimmt werden muß. Für Bitumen ist der Wert für den Sprühkegeldurchmesser nur schwer zu errechnen.

Für Zerstäubungsaufgaben stehen Ein-, bzw. Zweistoffdüsen und rotierende Scheiben zur Verfügung. Zweistoffdüsen liefern ein kleineres mittleres Korn als Einstoffdüsen, d. h., die Gesamtoberfläche des Granulates von Zweistoffdüsen ist erheblich größer als die von Einstoffdüsen. Deshalb benötigt man für Einstoffdüsen wesentlich weniger Trennmittel Kieselsäure Sipernat 22 S.

Einstoffdüsen mit einer Mindestbohrung von 1 mm werden eingesetzt. Kleinere Düsendurchmesser führen zu unerwünschten Verstopfungen. Der Mindestdurchmesser ist ein experimentell gefundener Wert. Der Sprühkegel wird so groß wie möglich gewählt (120 °), um einen optimalen Stoff- und Wärmeaustausch zu erzielen.

Das Bitumen verläßt die Düse bei einem Druck von 12 bar. Die Düse hat eine Bohrung von 1,5 mm. Bei diesen Bedingungen wird eine Kapazität von 75 kg / h Bitumengranulat erreicht.

Im Turm wird entsprechend dem gewünschten Massenstrom das Trennmittel Kieselsäure Sipernat 22 S über eine Schüttelrinne zugegeben. Das Bitumengranulat fällt in ein Vibrationswirbelbett dessen Gebläse einen Volumenstrom von 20 m³ / min hat. Das zweite Gebläse fördert 10 m³ / min. Die Luft im Turm wird oberhalb des Wirbelbettes über ein Filter durch ein drittes Gebläse abgesaugt. Dieses Gebläse hat einen Volumenstrom von 60 m³ / min. Der Überschußanteil der Luft wird oben im Turm durch eine Öffnung mit einem Durchmesser von 400 mm als Falschluft eingezogen. Diese Falschluft wandert dann im Gleichstrom mit dem Hauptproduktstrom durch den Sprühgranulator. Diese Konstruktion ermöglicht eine schlagartige Abkühlung des gerade versprühten Bitumens. Ein Gegenstromverfahren, wobei man die Luft oben im Turm abzieht, wäre auch möglich. Dies würde dann die verweilzeit von Granulat im Turm erhöhen.

Es hat sich während der Versuche herausgestellt, daß die angesaugte Umgebungsluft nicht genügend Kühlung bewirkt, um das heiße Bitumengranulat völlig abzukühlen. Dazu wurde neben dem Turm eine Kälteanlage installiert, die eine Abkühlung der Luft bis auf 10 °C ermöglicht.

Das abgekühlte Bitumengranulat verläßt über eine Absackvorrichtung den Sprühgranulator. Je nach Bedarf kann das Bitumen anschließend einer Nachbehandlung unterworfen werden. Ziel dieser Nachbehandlung ist eine genaue Abstellung der benötigten Menge an Trennmittel Kieselsäure Sipernat 22 S und eine Behandlung der Granulatoberfläche zur vollständigen Umhüllung mit dem Trennmittel Kieselsäure Sipernat 22 S. Für diese Nachbehandlung wird ein Trommelmischer verwendet. Jeder andere Mischer ist auch einsetzbar, solange er eine schonende Behandlung des Granulates gewährleistet.

Lagerversuche

Das Bitumengranulat stellt eine feste Form des erkalteten Straßenbaubitumens dar, das zum Schutze vor Verbackungen mit synthetischer Kieselsäure umhüllt wurde. Die im Technikumsmaßstab erstellten Mengen enthalten als Ausgangsbitumen ein B 80, das auch nach dem Produktionsvorgang die typischen, unveränderten Kenndaten aufwies. Das pulverförmige Bitumenkonzentrat soll eine vereinfachte und verbesserte Asphaltaufbereitung, bei der die Heißlagerung von flüssigem Bitumen an den Asphaltmischanlagen entfallen kann, ermöglichen. Voraussetzung ist eine den Praxisbedingungen angepaßte Lagerstabilität.

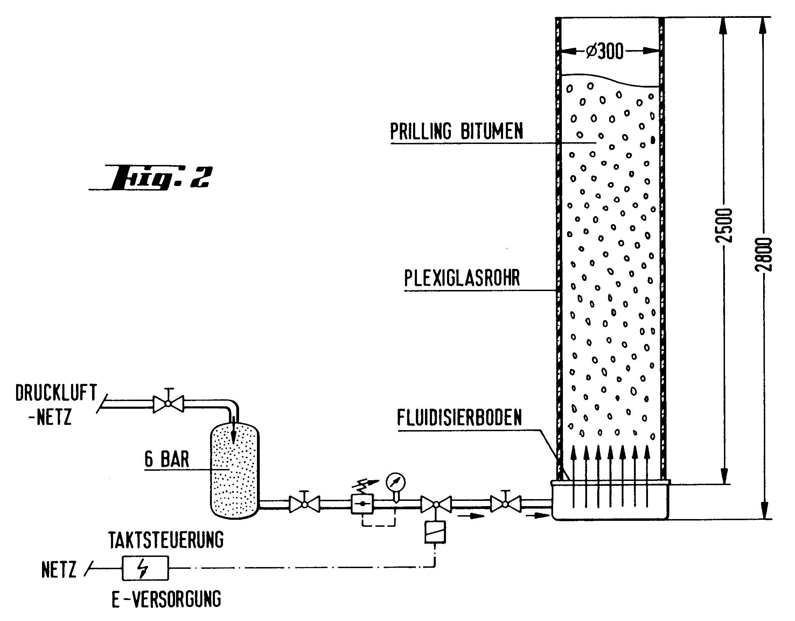

Bei üblicher Lagerung von Bitumengranulat, z.B. in Silos, entsteht eine Volumenverminderung des Produktes und dadurch eine Verbackung. Mit einer speziell erstellten Versuchsapparatur wurden Lagerungstests durchgeführt, die ein Zusammenkleben der einzelnen pulverförmigen Bitumenteilchen verhindern sollten. Die Versuchsapparatur ist in der Figur 2 schematisch dargestellt.

Für den Versuch wurde ein Bitumengranulat, das 10 Gew.-% Sipernat 22 S mit einer mittleren Agglomeratgrösse von 7 $\mu$m (Coulter Counter) enthält und sieben Monate in Fässern bei zum Teil sommerlichen Temperaturen (bis 35 °C) gelagert worden war, ausgewählt.

In einem Kunstglaszylinder gemäß Figur 2 wurden etwa 90 kg des Bitumengranulates eingefüllt. Die Höhe der Materialsäule betrug ca. 2000 mm. Taktweise wurde das Produkt durch einen Fluidisierungsboden belüftet. Die Volumenerhöhung betrug dadurch lediglich 10 - 15 %.

Versuch 1

| | |
|---|---|
| Testprodukt | : Bitumengranulat mit 10 % Sipernat 22 S |
| Produkttemperatur | : 27 °C beim Einfüllen |
| Außentemperatur | : 17 - 35 °C |
| Belüftungszeit | : 30 sec. |
| Pausenzeit | : 30 min. bis 120 min. |
| Druckluft | : 2 bar |
| Versuchsdauer | : 16 Tage |

Nach den ersten 7 Tagen wurde die Pausenzeit auf 120 min. erhöht.

Versuch 2

Wie Versuch Nr. 1, jedoch wurde die Pausenzeit erst auf 8 h erhöht, dann lag das Produkt 10 Tage in Ruhe, danach wurde es wieder belüftet.

Das Bitumengranulat erbrachte den Nachweis, daß es bei Einhaltung von vorgegebenen Bedingungen lagerstabil ist. Entscheidend ist die Belüftung durch einen Fluidisierungsboden, die in Zeitintervallen erfolgen sollte.

Berücksichtigt man, daß für die Lagerungsversuche ein Ausgangsprodukt, das eine Verweilzeit von sieben Monaten in Fässern erfahren hatte Verwendung fand, so ist das Ergebnis zufriedenstellend. Mit B 80 wurde bewußt bei der Granulatherstellung ein weiches Straßenbaubitumen ausgewählt. Härtere Bitumina dürften noch lagerungsstabilere Pulverkonzentrate ergeben. Eine Lagerung von erkaltetem Bitumengranulat im Silo mit zeitweiliger Fluidisierung ist somit durchführbar. Die Belüfungsdauer von 30 sec. ist ausreichend. Die Pausenzeiten sind stark von dem SIPERNAT-Anteil, der Füllhöhe im Silo und der Temperatur abhängig. Pausenintervalle von 30 Minuten bis 3 Stunden können eingeplant werden.

Die Ergebnisse zeigen, daß ein Transport von Bitumengranulat in Säcken oder als loses Schüttgut möglich ist. Je nach Entfernung und Dauer sollte der Transport von loser Ware mit einem für dieses Produkt geeigneten Transportgerät (mit integriertem Fluidisierungsboden) erfolgen.

Resümierend darf festgestellt werden, daß Bitumengranulat herstellbar, transportier- und lagerfähig ist, soweit die erkannten Bedingungen eingehalten werden.

**Patentansprüche**

1. Rieselfähiges Bitumengranulat, dadurch gekennzeichnet, daß es als Umpuderungs- und Trennmittel Fällungskieselsäure in einer Menge von 0,5 bis 15 Gew.-%, vorzugsweise 6,1 bis 15 Gew.-% enthält.

2. Verfahren zur Herstellung des rieselfähigen Bitumengranulates nach Anspruch 1, dadurch gekennzeichnet, daß man in einem bekannten Sprühmischer heißes, flüssiges Bitumen verdüst und gleichzeitig über den Kaltluftstrom die Fällungskieselsäure in den Sprühmischer einträgt.

**Claims**

1. Free flowing bitumen granulate, characterised in that it contains from 0.5 to 15 % by weight, preferably from 6.1 to 15% by weight, of precipitated silica as powdering and separating agent.

2. A process for the preparation of the free flowing bitumen granulate according to claim 1, characterised in that hot, liquid bitumen is atomised in a known spray mixer and at the same time precipitated silica is introduced into the spray mixer via the stream of cold air.

**Revendications**

1. Granulé de bitume qui s'écoule, caractérisé en ce qu'il contient comme agent d'enrobage et de séparation une silice précipitée à une teneur de 0,5 à 15 % en poids, de préférence 6,1 à 15 % en poids.

2. Procédé de fabrication de granulé de bitume qui s'écoule, selon la revendication 1, caractérisé en ce que dans un mélangeur à pulvérisation on pulvérise du bitume chaud liquide et que simultanément on incorpore, par le courant d'air froid, la silice précipitée dans le mélangeur à pulvérisation.

KÜHLLUFT + TRENNMITTEL

Fig. 1

ZUSATZ-KÜHLLUFT

BITUMEN

ABLUFT

ZULUFT FÜR WIRBELBETT

GRANULAT

Fig. 2